# EUROPEAN PATENT SPECIFICATION

(11) **EP 3 670 132 B1**
(45) Date of publication and mention of the grant of the patent: **17.04.2024**
(21) Application number: 18845622.2
(22) Date of filing: 12.07.2018
(51) Int. Cl.: B29C 33/02, B29C 35/02, B60C 1/00, B60C 15/06, B29L 30/00, B29D 30/06

(54) **TIRE PRODUCTION METHOD**
REIFENHERSTELLUNGSVERFAHREN
PROCÉDÉ DE PRODUCTION DE PNEU

(30) Priority: 18.08.2017 JP 2017158232
(43) Date of publication of application: 24.06.2020
(73) Proprietor: Bridgestone Corporation, Tokyo 104-8340 (JP)
(72) Inventor: ORIDE, Junichi, Tokyo 104-8340 (JP); ODA, Yasuhiro, Tokyo 104-8340 (JP); IZUMOTO, Ryuji, Tokyo 104-8340 (JP)
(74) Representative: Marks & Clerk LLP
(86) International application number: PCT/JP2018/026387
(87) International publication number: WO 2019/035298

(56) References cited:
- WO-A1-2012/026006
- WO-A1-2013/125735
- WO-A1-2013/125735
- WO-A1-2016/088685
- WO-A1-2016/088685
- JP-A- 2004 026 897
- JP-A- 2007 083 703
- JP-A- 2010 270 175
- JP-A- 2010 270 175
- JP-A- 2012 046 601
- US-A1- 2007 040 303
- US-A1- 2012 048 443
- US-A1- 2013 225 758

## Description

### TECHNICAL FIELD

The present invention relates to a tire production method.

### BACKGROUND ART

In a tire vulcanization process, there has been conventionally known a method using a vulcanization device provided with a vulcanizing bladder which expands/contracts by supply/discharge of a heating medium such as steam supplied from the exterior.
Specifically, a vulcanizing bladder is provided on the inner peripheral side of an unvulcanized tire (a green tire) set within a mold of a vulcanization device, such that the vulcanizing bladder, to which a heating medium is supplied after the start of a vulcanization process, expands and presses the outer peripheral surface of the unvulcanized tire onto a molding face having a predetermined pattern embossed thereon of the mold. The unvulcanized tire thus pressed against the mold by the vulcanizing bladder is maintained in such a state of being pressurized and heated by way of the vulcanizing bladder during a predetermined period of time so that vulcanization gradually proceeds, until a predetermined degree of vulcanization is achieved.

In respect of the vulcanizing bladder, the device is required to have good heat-aging resistance or the like, in particular, in terms of improving durability thereof and in this regard there has been known a technique of enhancing heat-aging resistance of a vulcanizing bladder by optimizing a composition of materials constituting the vulcanizing bladder (refer to PTL 1, for example).
WO2016/088685 A1 discloses a crosslinked fluorine rubber composition as a vulcanizing bladder for tire production, obtainable from a composition comprising fluorine rubber, carbon black, a fatty oil or aliphatic hydrocarbon component, and a peroxide crosslinking agent. Further reference is made to rubber compositions disclosed in US2007/040303 A1; US2012/048443 A1; JP2010 270175 A; WO2013/125735 A1; US2013/225758 A1; and JP2004 026897 A.

### CITATION LIST

### Patent Literature

PTL 1: JP 10-287779 Laid-Open

### SUMMARY

Further, in respect of a vulcanization process using a vulcanizing bladder, there has been known in recent years, in addition to the matter of heat-aging resistance thereof described above, a problem in that the vulcanization bladder tends to be cured and thus deteriorate due to the migration of sulfur thereto from the inner surface of an unvulcanized tire.
In particular, an unvulcanized tire having in an inner surface thereof a rubber member containing sulfur at a high concentration (which member will occasionally be referred to as a "high sulfur concentration rubber member" hereinafter) tends to exhibit a significant migration of sulfur contained in the high sulfur concentration rubber member thereof to a vulcanizing bladder during vulcanization, thereby causing a problem of facilitating curing of the vulcanizing bladder and thus deteriorating durability thereof and making a product life of the vulcanizing bladder short.

Further, in a case where sulfur has migrated from a member provided at the inner surface of the tire to the vulcanizing bladder, a distribution of sulfur concentration in the tire thickness direction in the rubber member adjacent to the vulcanizing bladder is made uneven, which may adversely change physical properties of the vulcanized tire.

In view of this, an object of the present disclosure is to provide a tire production method which is capable of effectively inhibiting the migration of sulfur to a vulcanizing bladder in a process of vulcanizing an unvulcanized tire provided at an inner surface thereof with a member having a high concentration of sulfur. Another object of the present disclosure is to provide a tire which is capable of retaining intended physical properties without losing sulfur when it is vulcanized.

Specifically, the tire production method of the present invention includes a vulcanization process of vulcanizing an unvulcanized tire which is provided, in at least a portion of the innermost surface thereof, with a high sulfur concentration rubber member made of a rubber composition containing sulfur by ≥ 1.0 parts by mass with respect to 100 parts by mass of a rubber component, wherein the vulcanization process employs a vulcanizing bladder made of a rubber composition for a bladder, which rubber composition contains fluororubber by 50 mass % to 100 mass % and a crosslinking agent selected from the group consisting of a polyol-based crosslinking agent, a polyamine-based crosslinking agent, an oxazole-based crosslinking agent, a thiazole-based crosslinking agent, an imidazole-based crosslinking agent, and a triazine-based crosslinking agent,
wherein the high sulfur concentration rubber member is a chafer rubber and/or a reinforcing rubber for a runflat tire,
the fluororubber is a vinylidene fluoride-based fluororubber having a structural unit derived from vinylidene fluoride (VdF unit) and a structural unit derived from at least one selected from the group consisting of hexafluoropropylene (HFP), 2,3,3,3-tetrafluoropropylene, and perfluoro(alkylvinyl ether) (PAVE),
the mole ratio of the VdF unit with respect to the structural unit derived from at least one selected from the group consisting of HFP, 2,3,3,3-tetrafluoropropylene and PAVE in the fluororubber is in the range of 50/50 to 78/22, and
δG' is in the range of ≥ 120 kPa and ≤ 3000 kPa, wherein δG' represents (G' (1%) - G' (100%)), wherein G' (1%) represents shear elasticity at dynamic strain: 1% and G' (100%) represents shear elasticity at dynamic strain: 100% of the fluororubber in an unvulcanized state, measured in a dynamic viscoelasticity test by a rubber process analyzer (RPA) under the conditions of the measurement frequency: 1 Hz, the measurement temperature: 100 °C, respectively.
It is possible to effectively inhibit by the aforementioned features the migration of sulfur from a high sulfur concentration rubber member to a vulcanizing bladder in a vulcanization process.

In the tire production method of the present disclosure, it is preferable that the rubber composition for a bladder contains fluororubber by substantially 100 mass %. The migration of sulfur from a high sulfur concentration rubber member to a vulcanizing bladder in a vulcanization process can be more effectively inhibited than otherwise in this case.

Further, in the tire production method of the present disclosure, the high sulfur concentration rubber member is a chafer rubber and/or a reinforcing rubber for a runflat tire. An effect of inhibiting the migration of sulfur from a high sulfur concentration rubber member to a vulcanizing bladder in a vulcanization process can be more conspicuously demonstrated than otherwise in this case.

Yet further, in the tire production method of the present disclosure, the fluororubber is a vinylidene fluoride-based fluororubber having a structural unit derived from vinylidene fluoride (VdF unit) and a structural unit derived from at least one selected from the group consisting of hexafluoropropylene (HFP), 2,3,3,3-tetrafluoropropylene, and perfluoro(alkylvinyl ether) (PAVE) and the mole ratio of the VdF unit with respect to the structural unit derived from at least one selected from the group consisting of HFP, 2,3,3,3-tetrafluoropropylene and PAVE in the fluororubber is in the range of 50/50 to 78/22. The migration of sulfur from a high sulfur concentration rubber member to a vulcanizing bladder in a vulcanization process can be more effectively inhibited than otherwise in this case.
Yet further, in the tire production method of the present disclosure, provided that G' (1%) represents shear elasticity at dynamic strain: 1% and G' (100%) represents shear elasticity at dynamic strain: 100% of the fluororubber in an unvulcanized state, measured in a dynamic viscoelasticity test by a rubber process analyzer (RPA) under the conditions of the measurement frequency: 1 Hz, the measurement temperature: 100 °C, respectively, and that δG' represents the difference between G' (1%) and G' (100%), i.e. (G' (1%) - G' (100%)), 6G' is in the range of ≥ 120 kPa and ≤ 3000 kPa. The migration of sulfur from a high sulfur concentration rubber member to a vulcanizing bladder in a vulcanization process can be more effectively inhibited than otherwise in this case.

Yet further, in the tire production method of the present disclosure, it is preferable that the rubber composition for a bladder further contains at least one selected from the group consisting of a fatty oil and an aliphatic hydrocarbon. It is possible to improve tensile elongation at break and strength at high temperature of the vulcanizing bladder in this case.

Yet further, in the tire production method of the present disclosure, it is preferable that the fatty oil is at least one selected from the group consisting of a non-dying oil and a semi-drying oil. It is possible to obtain a crosslinked rubber product for a bladder, having a relatively large tensile elongation at break and low hardness, in this case.

Yet further, in the tire production method of the present disclosure, it is preferable that the rubber composition for a bladder further contains carbon black, wherein the carbon black has a nitrogen adsorption specific surface area (N₂SA) in the range of 25 m²/g to 180 m²/g and dibutyl phthalate (DBP) oil absorption in the range of 40 ml/100 g to 180 ml/100 g. It is possible to improve tensile elongation at break and strength at high temperature of the vulcanizing bladder in this case.

A tire obtained by the tire production method of the present invention does not experience a decrease in sulfur content in vulcanization and therefore can continue to have the intended physical properties thereof after the vulcanization.

According to the present disclosure, it is possible to provide a tire production method which is capable of effectively inhibiting the migration of sulfur to a vulcanizing bladder in a process of vulcanizing an unvulcanized tire provided at an inner surface thereof with a member having a high concentration of sulfur. Further, it is possible to provide a tire which is capable of retaining intended physical properties without experiencing a decrease in sulfur content when it is vulcanized.

### BRIEF DESCRIPTION OF THE DRAWINGS

In the accompanying drawings, wherein:
FIG. 1 is a sectional view in the tire widthwise direction, schematically showing a state in which an unvulcanized tire is vulcanized by a vulcanization device having a vulcanizing bladder; and
FIG. 2 is a graph showing the results obtained by measuring, for each of vulcanized tire samples of Examples and Comparative Examples, a distribution of sulfur content/concentration (%) observed from the innermost surface of the tire toward the depth direction thereof by using a scanning type electron microscope and an electron probe micro-analyzer.

### DETAILED DESCRIPTION

Hereinafter, an embodiment of a tire production method of the present disclosure and a tire will be demonstratively described in detail.

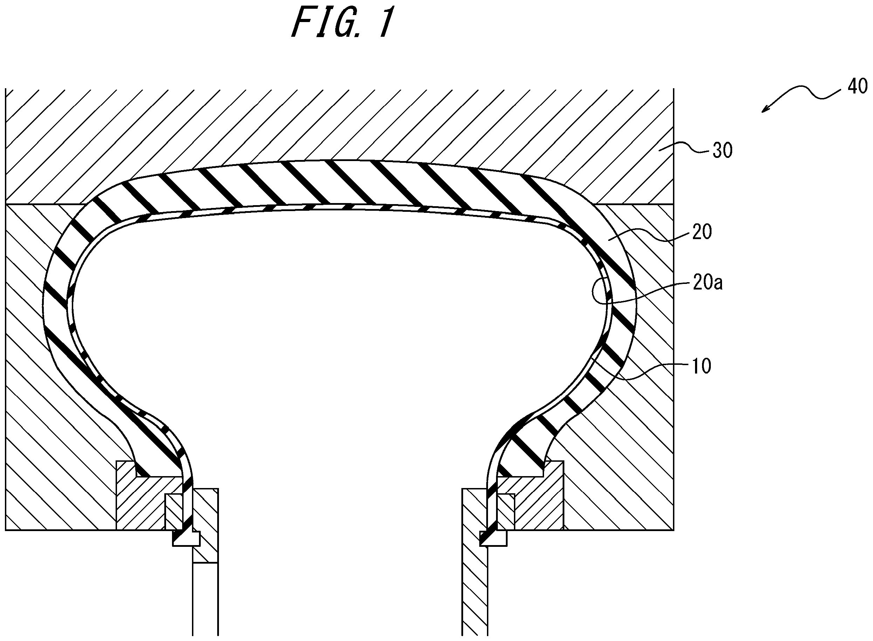

FIG. 1 schematically shows a state in which an unvulcanized tire is vulcanized by a vulcanization device having a vulcanizing bladder.
Type of a vulcanization device 40 for use in the tire production method of the present disclosure is not particularly restricted and any conventionally known vulcanization device can be used as the vulcanization device 40 as long as it has a vulcanizing bladder 10 and a mold 30 for molding an unvulcanized tire.

The tire production method of the present disclosure includes, as shown in FIG. 1, a vulcanization process of vulcanizing an unvulcanized tire 20 which is provided, in at least a portion of the innermost surface 20a thereof, with a high sulfur concentration rubber member (not shown) made of a rubber composition containing sulfur by ≥ 1.0 parts by mass with respect to 100 parts by mass of a rubber component, wherein the vulcanization process employs a vulcanizing bladder 10 made of a rubber composition for a bladder, which rubber composition contains fluororubber by 50 mass % to 100 mass %.
It is possible to effectively inhibit, by forming the vulcanizing bladder 10 from the rubber composition containing fluororubber by 50 mass % to 100 mass % for a bladder, the migration of sulfur to the vulcanizing bladder from a high sulfur concentration rubber member containing sulfur at a high concentration (≥ 1.0 parts by mass of sulfur with respect to 100 parts by mass of a rubber component) provided at the innermost surface 20a (a surface to be in contact with the vulcanizing bladder) of the unvulcanized tire 20. As a result, it is possible to manufacture a tire which does not experience a decrease in sulfur content in the unvulcanized state thereof and thus can retain intended physical properties when it is vulcanized. Further, it is possible to prevent the vulcanizing bladder from being cured and thus prolong the product life thereof because sulfur in the unvulcanized tire 20 does not migrate into the vulcanizing bladder 10 when the unvulcanized tire is vulcanized.

### (Unvulcanized tire)

The tire production method of the present disclosure employs, as an unvulcanized tire, an unvulcanized tire which is provided, in at least a portion of the innermost surface 20a thereof, with a high sulfur concentration rubber member made of a rubber composition containing sulfur by ≥ 1.0 parts by mass with respect to 100 parts by mass of a rubber component.

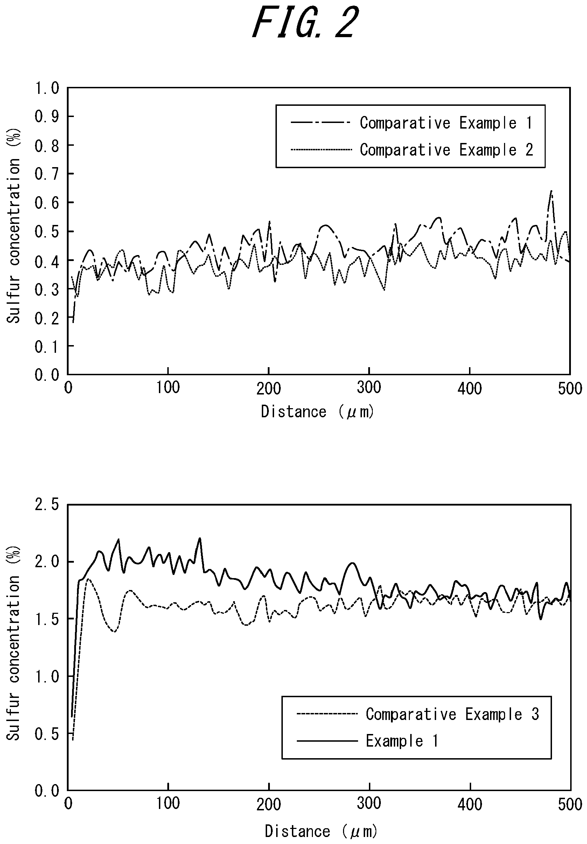

Type of the high sulfur concentration rubber member is not particularly restricted as long as the high sulfur concentration rubber member is made of a rubber composition containing sulfur by ≥ 1.0 parts by mass with respect to 100 parts by mass of a rubber component and it is provided in at least a portion of the innermost surface of the unvulcanized tire. Examples of a high sulfur concentration rubber member include various members such as a chafer rubber, an innerliner rubber, a reinforcing rubber for a runflat tire (a side reinforcing rubber), a toe rubber, and the like. The high sulfur concentration rubber member is a chafer rubber and/or a reinforcing rubber for a runflat tire among these examples. A chafer rubber and/or a reinforcing rubber for a runflat tire normally have particularly high sulfur concentrations among the members provided at the innermost surface of the unvulcanized tire, whereby an effect of inhibiting the migration of sulfur from the high sulfur concentration rubber member to the vulcanizing bladder in vulcanization, which effect is achieved by the present disclosure, can be particularly well demonstrated in the chafer rubber and/or the reinforcing rubber for a runflat tire.
With regard to a runflat tire of which innermost surface is provided with the aforementioned reinforcing rubber, the runflat tire may have a structure as shown in Fig. 2 of JP 2014-031147 Laid Open, in which a portion of an innerliner rubber, which portion corresponds to a tire side portion, has been removed. It is possible by this feature to prevent the vulcanizing bladder from being cured and maintain such good performances of a runflat tire as intended by the rubber compositions thereof, while successfully reducing the weight and improving riding comfort of the runflat tire.

A sulfur concentration in the rubber composition constituting the high sulfur concentration rubber member is to be ≥ 1.0 parts by mass, preferably ≥ 1.5 parts by mass, more preferably ≥ 3.0 parts by mass, and particularly preferably ≥ 5.0 parts by mass, with respect to 100 parts by mass of a rubber component. When the sulfur concentration in the rubber composition is less than 1.0 parts by mass with respect to 100 parts by mass of the rubber component, it is not possible to effectively prevent curing of the vulcanizing bladder and a resulting uneven distribution of sulfur concentration/content in the rubber.
The upper limit of the sulfur concentration in the rubber composition, although it is not particularly restricted, is preferably ≤ 10 parts by mass and more preferably ≤ 8 parts by mass with respect to 100 parts by mass of a rubber component. When the sulfur concentration in the rubber composition is ≤ 10 parts by mass with respect to 100 parts by mass of the rubber component, curing of the vulcanizing bladder can be more reliably inhibited and therefore an uneven distribution of sulfur concentration/content in the rubber can be more reliably prevented than otherwise.

Type of the rubber composition constituting the high sulfur concentration rubber member is not particularly restricted, except that a sulfur content thereof needs to be within the aforementioned ranges.
The rubber component contained in the rubber composition may be appropriately changed in accordance with a purpose and/or an application of the high sulfur concentration rubber member. The rubber component preferably includes a diene-based rubber such as natural rubber (NR), polybutadiene rubber (BR), isoprene rubber (IR), styrene-butadiene copolymer rubber (SBR), butyl rubber (IIR) in terms of good reinforcing properties and the like thereof.

The rubber composition constituting the high sulfur concentration rubber member may contain, in addition to the rubber component and sulfur described above, additives (i.e. other components) generally added to a rubber composition. For example, additives generally used in the rubber industry such as reinforcing filler, antioxidant, vulcanization accelerator, crosslinking agent, vulcanization accelerator auxiliary, silane coupling agent, glycerin fatty acid ester, softening agent, stearic acid, agent for preventing deterioration by ozone, surfactant, and the like may be appropriately added to the rubber composition.

The structure of an unvulcanized tire for use in the tire production method of the present disclosure is not particularly restricted as long as the unvulcanized tire is provided with the high sulfur concentration rubber member described above. Any unvulcanized tire can be used in accordance with the tire type and the required performances in this regard.

### (Vulcanizing bladder)

The tire production method of the present disclosure characteristically employs, as a vulcanizing bladder, a vulcanizing bladder made of a rubber composition for a bladder, which rubber composition contains fluororubber by 50 mass % to 100 mass %.

As describe above, it is possible to effectively inhibit the migration of sulfur from the high sulfur concentration rubber member to a vulcanizing bladder by forming the vulcanizing bladder from a rubber composition for a bladder, which contains fluororubber by 50 mass % to 100 mass %.

### Fluororubber

The rubber composition for a bladder, for forming the vulcanizing bladder, needs to contain fluororubber by 50 mass % to 100 mass %, preferably by 90 mass % to 100 mass %, more preferably by 95 mass % to 100 mass %, and most preferably by 100 mass %.

Inclusion of the fluororubber by ≥ 50 mass % in the rubber composition for a bladder realizes a good effect of inhibiting the sulfur migration as desired and also improves mold-releasability and heat resistance of a resulting bladder.

The fluororubber is a vinylidene fluoride-based fluororubber having a structural unit derived from vinylidene fluoride (VdF unit) and a structural unit derived from at least one selected from the group consisting of hexafluoropropylene (HFP), 2,3,3,3-tetrafluoropropylene, and perfluoro(alkylvinyl ether) (PAVE) (which structural unit will occasionally be referred to as a "second monomer unit" hereinafter).
The mole ratio of the VdF unit with respect to the structural unit derived from at least one selected from the group consisting of HFP, 2,3,3,3-tetrafluoropropylene and PAVE in the fluororubber is in the range of 50/50 to 78/22.

When a mole ratio of the VdF unit with respect to the second monomer unit in the fluororubber is within the aforementioned range, the vulcanizing bladder obtained from the rubber composition for a bladder can realize a better sulfur migration inhibiting effect than otherwise.
The VdF unit/the second monomer unit (the mole ratio) is preferably in the range of 52/48 to 77/23 and more preferably in the range of 55/45 to 75/25 in this regard.

A content of the VdF unit is preferably ≥ 50 mole %, more preferably ≥ 52 mole %, and further more preferably ≥ 55 mole % with respect to all the structural units. Further, a content of the VdF unit is preferably ≤ 78 mole %, more preferably ≤ 77 mole %, further more preferably ≤ 75 mole %, particularly preferably ≤ 74 mole %, and most preferably ≤ 70 mole % with respect to all the structural units.

A content of the second monomer unit is preferably ≥ 22 mole %, more preferably ≥ 23 mole %, further more preferably ≥ 25 mole %, particularly preferably ≥ 26 mole %, and most preferably ≥ 30 mole % with respect to all the structural units. Further, a content of the second monomer unit is preferably ≤ 50 mole %, more preferably ≤ 48 mole %, and further more preferably ≤ 45 mole % with respect to all the structural units.

Perfluoro(methylvinyl ether) (PMVE) and perfluoro(propylvinyl ether) (PPVE) are preferable and PMVE is particularly preferable as the PAVE.

At least one selected from the group consisting of hexafluoropropylene and 2,3,3,3-tetrafluoropropylene is preferable as the second monomer unit.

The rubber composition for a bladder may contain, in addition to the VdF unit and the second monomer unit, structural unit(s) derived from another monomer/other monomers. Type of the monomer(s) other than the VdF (unit) and the second monomer (unit) is not particularly restricted as long as the monomer(s) is copolymerizable with the VdF and the second monomer. Examples of the other monomer(s) include: a fluorine-containing monomer such as tetrafluoroethylene (TFE), chlorotrifluoroethylene (CTFE), trifluoroethylene, trifluoropropylene, pentafluoropropylene, trifluorobutene, tetrafluoroisobutene, hexafluoroisobutene, vinyl fluoride, iodine-containing vinyl fluoride ether, and a fluorine-containing monomer (1) represented by general formula (1) shown below (note that the fluorine-containing monomer (1) excludes 2,3,3,3-tetrafluoropropylene):

CH₂ = CFR_{f} ··· (1)

(In the general formula (1), Rf represents a normal or branched C₁₋₁₂ fluoroalkyl group); a non-fluorine-containing monomer such as ethylene (Et), propylene (Pr), alkylvinyl ether; a monomer capable of imparting a crosslinking group (a cure site); a reactive emulsifier; and the like. The aforementioned monomers and the compounds may be used by either a single type or two or more types in combination.

Examples of the monomer(s) other than the VdF and the second monomer, which can be used, include perfluorovinyl ether represented by general formula (2) shown below:

CF₂ = CFOCF₂OR_{f}¹ ··· (2)

(In the general formula (2), R_{f}¹ represents a normal or branched C₁₋₆ perfluoroalkyl group, a cyclic C₅₋₆ perfluoroalkyl group, or a normal or branched C₂₋₆ perfluorooxyalkyl group having one to three oxygen atoms.)
CF₂ = CFOCF₂OCF₃, CF₂ = CFOCF₂OCF₂CF₃ or CF₂ = CFOCF₂OCF₂CF₂OCF₃ are preferably used in this regard.

A monomer in which Rf is a normal fluoroalkyl group is preferable and a monomer in which Rf is a normal perfluoroalkyl group is more preferable as the fluorine-containing monomer (1) represented by the general formula (1). The number of carbon atoms in R_{f} is preferably in the range of 1 to 6. Examples of the fluorine-containing monomer (1) represented by the general formula (1) include CH₂ = CFCF₂CF₃, CH₂ = CFCF₂CF₂CF₃, CH₂ = CFCF₂CF₂CF₂CF₃, and the like.

A copolymer obtained by copolymerizing the VdF and the second monomer with a monomer capable of imparting a crosslinking group can also be suitably used as the rubber composition for a bladder. Type of the monomer capable of imparting a crosslinking group is not particularly restricted as long as the monomer is capable of introducing an appropriate crosslinking group to the rubber composition in accordance with the production method and/or the intended crosslinking system. Examples of the monomer capable of imparting a crosslinking group include: conventionally known polymerizable compounds having iodine atom, bromine atom, carbon-carbon double bond, cyano group, carboxyl group, hydroxide group, amino group, ester group or the like; a chain transfer agent; and the like.

Examples of the monomer capable of imparting a preferable crosslinking group include a compound represented by general formula (3) shown below:

CY¹₂=CY²R_{f}²X¹ ··· (3)

(In the general formula (3), Y¹ and Y² may be of either the same type or different types and each of which represents fluorine atom, hydrogen atom or CH₃; R_{f}² represents a normal/branched, fluorine-containing alkylene group which may have at least one ether bond and/or an aromatic ring and in which at least one of the hydrogen atoms has been each substituted with fluorine atom; and X¹ represents iodine atom or bromine atom.) Specific examples of the monomer capable of imparting a preferable crosslinking group include:
an iodine/bromine-containing monomer represented by general formula (4) shown below,

CY¹₂ = CY²R_{f}³CHR¹-X¹ ··· (4)

(In the general formula (4), Y¹, Y² and X¹ are defined in the same manner as general formula (3); Rf represents a normal/branched, fluorine-containing alkylene group which may have at least one ether bond and in which at least one of the hydrogen atoms has been each substituted with fluorine atom, that is, Rf represents either (i) a normal/branched, fluorine-containing alkylene group in which at least one of the hydrogen atoms has been each substituted with fluorine atom or (ii) a normal/branched, fluorine-containing oxyalkylene group in which at least one of the hydrogen atoms has been each substituted with fluorine atom or (iii) a normal/branched, fluorine-containing polyoxyalkylene group in which at least one of the hydrogen atoms has been each substituted with fluorine atom; and R¹ represents hydrogen atom or methyl group.); an iodine/bromine-containing monomer represented by general formulae (5)-(22) shown below (in general formulae (5)-(22), X¹ is defined in the same manner as described above),

CY⁴₂ = CY⁴(CF₂)ₙ-X¹ ··· (5)

(In the general formula (5), Y⁴s may be of either the same type or different types and each of which represents hydrogen atom or fluorine atom; and n represents an integer in the range of 1 to 8.)

CF₂ = CFCF₂R_{f}⁴-X¹ ··· (6)

(In the general formula (6), R_{f}⁴ represents
; and n represents an integer in the range of 0 to 5.)

CF₂ = CFCF₂(OCF(CF₃)CF₂)ₘ(OCH₂CF₂CF₂)ₙOCH₂CF₂-X¹ ··· (7)

(In the general formula (7), m represents an integer in the range of 0 to 5 and n represents an integer in the range of 0 to 5.)

CF₂ = CFCF₂(OCH₂CF₂CF₂)ₘ(OCF(CF₃)CF₂)ₙOCF(CF₃)-X¹ ··· (8)

(In the general formula (8), m represents an integer in the range of 0 to 5 and n represents an integer in the range of 0 to 5.)

CF₂ = CF(OCF₂CF(CF₃))ₘO(CF₂)ₙ-X¹ ··· (9)

(In the general formula (9), m represents an integer in the range of 0 to 5 and n represents an integer in the range of 1 to 8.)

CFX¹ = CF(OCFX¹CF(CFX¹))X¹-X¹ ··· (10)

(In the general formula (10), m represents 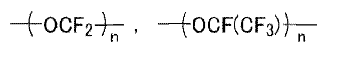 an integer in the range of 1 to 5.)

CFX¹ = CFOCFX¹(CF(CFX¹)OCF₂)X¹CF(-X¹)CFX¹ ··· (11)

(In the general formula (11), n represents an integer in the range of 1 to 4.)

CF₂ = CFO(CF₂)ₙOCF(CF₃)-X¹ ··· (12)

(In the general formula (12), n represents an integer in the range of 2 to 5.)

CF₂ = CFO(CF₂)ₙ-(C₆H₄)-X¹ ··· (13)

(In the general formula (13), n represents an integer in the range of 1 to 6.)

CF₂ = CF(OCF₂CF(CF₃))ₙOCF₂CF(CF₃)-X¹ ··· (14)

(In the general formula (14), n represents an integer in the range of 1 to 2.)

CH₂ = CFCF₂O(CF(CF₃)CF₂O)ₙCF(CF₃)-X¹ ··· (15)

(In the general formula (15), n represents an integer in the range of 0 to 5.)

CF₂ = CFO(CF₂CF(CF₃)O)ₘ(CF₂)ₙ-X¹ ··· (16)

(In the general formula (16), m represents an integer in the range of 0 to 5 and n represents an integer in the range of 1 to 3.)

CH₂ = CFCF₂OCF(CF₃)OCF(CF₃)-X¹ ··· (17)

CH₂ = CFCF₂OCH₂CF₂-X¹ ··· (18)

CF₂ = CFO(CF₂CF(CF₃)O)ₘCF₂CF(CF₃)-X¹ ··· (19)

(In the general formula (19), m represents an integer of ≥ 0.)

CF₂ = CFOCF(CF₃)CF₂O(CF₂)ₙ-X¹ ··· (20)

(In the general formula (20), n represents an integer of ≥ 1.)

CF₂ = CFOCF₂OCF₂CF(CF₃)OCF₂-X¹ ··· (21)

CH₂ = CH-(CF₂)ₙX¹ ··· (22)

(In the general formula (22), n represents an integer in the range of 2 to 8.); and the like. The aforementioned examples may be used by either a single type or two or more types in combination.

Preferable examples of the iodine containing monomer/the bromine-containing monomer represented by general formula (4) include iodine-containing fluorinated vinyl ether represented by general formula (23) shown below:
I
(In the general formula (23), m represents an integer in the range of 1 to 5 and n represents an integer in the range of 0 to 3.)
Specific examples of the iodine-containing fluorinated vinyl ether represented by general formula (23) include the following compounds. 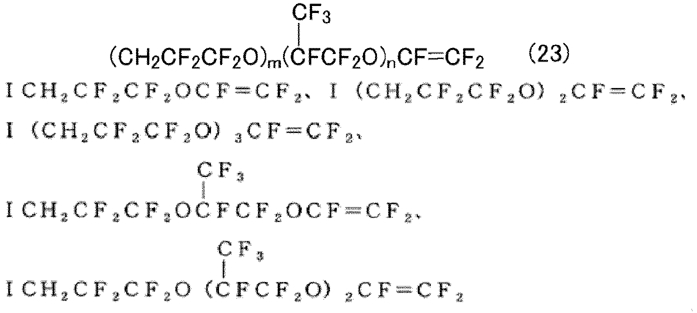 I CH₂CF₂CF₂OCF = CF₂ is preferable among these examples.
Preferable examples of the iodine containing monomer/the bromine-containing monomer represented by general formula (5) specifically include I CF₂CF₂CF = CH₂ and I (CF₂CF₂)₂CF = CH₂.
Preferable examples of the iodine containing monomer/the bromine-containing monomer represented by general formula (9) specifically include I (CF₂CF₂)₂OCF = CF₂.
Preferable examples of the iodine containing monomer/the bromine-containing monomer represented by general formula (22) specifically include CH₂ = CHCF₂CF₂ I and I (CF₂CF₂)₂CH = CH₂.

Preferable examples of the monomer capable of imparting a crosslinking group include a bisolefin compound represented by a formula: R²R³C = CR⁴-Z-CR5 = CR⁶R⁷ (in the formula, R², R³, R⁴, R⁵, R⁶, R⁷ are of either the same type or different types and each of them is either H or an C₁₋₅ alkyl group; Z represents a normal/branched C₁₋₁₈ alkylene, cycloalkylene, or (per)fluoropolyoxyalkylene group, which may include oxygen atom therein and is preferably at least partially fluorinated). In the present disclosure, "(per)fluoropolyoxyalkylene group" represents "fluoropolyoxyalkylene group or perfluoropolyoxyalkylene group".

The aforementioned "Z" preferably represents a C₄₋₁₂ (per)fluoroalkylene group and R², R³, R⁴, R⁵, R⁶, R⁷ preferably represents hydrogen atoms, respectively. In a case where Z is a (per)fluoropolyoxyalkylene group, Z is preferably a (per)fluoropolyoxyalkylene group represented by a formula: -(Q)ₚ-CF₂O-(CF₂CF₂O)ₘ-(CF₂O)ₙ-CF₂-(Q)ₚ- (in the formula, Q represents a C₁₋₁₀ alkylene or a C₂₋₁₀ oxyalkylene group; p is an integer of 0 or 1; m and n represent integers, respectively, wherein a ratio of m/n is in the range of 0.2 to 5 and m and n are set such that the molecular weight of the (per)fluoropolyoxyalkylene group is in the range of 500 to 10,000, preferably in the range of 1,000 to 4,000). In the formula, Q is preferably selected from the group consisting of -CH₂OCH₂- and -CH₂O(CH₂CH₂O)ₛCH₂- (1 ≤ s ≤ 3).

Preferable examples the bisolefin include CH₂ = CH-(CF₂)₄-CH = CH₂, CH₂ = CH-(CF₂)₆-CH = CH₂, a compound represented by a formula: CH₂ = CH-Z¹-CH = CH₂ (in the formula, Z¹ represents -CH₂OCH₂)-CF₂O-(CF₂CF₂O)ₘ-(CF₂O)ₙ-CF₂-CH₂OCH₂- (m/n = 0.5)), and the like. 3,3,4,4,5,5,6,6,7,7,8,8-dodecafluoro-1,9-decadiene, represented by CH₂ = CH-(CF₂)₆-CH = CH₂, is preferable among these examples.

In a case where the rubber composition for a bladder contains a structural unit(s) derived from monomer(s) other than the VdF (unit) and the second monomer (unit), a content of the structural unit(s) is preferably in the range of 0 mole % to 40 mole %, more preferably in the range of 0 mole % to 30 mole %, further more preferably in the range of 0 mole % to 20 mole %, and particularly preferably in the range of 0 mole % to 10 mole %, with respect to the total structural units representing 100 mole %.

The rubber composition for a bladder may contain a structural unit(s) derived from monomer(s) other than the VdF and the second monomer, as described above. However, it is preferable that the rubber composition for a bladder does not contain a structural unit derived from such other monomers as described above in terms of effectively improving tensile characteristics at high temperature, of a crosslinked rubber product for a bladder obtained from the fluororubber composition of the present disclosure. In short, the rubber composition for a bladder is a binary copolymer composed of only the VdF unit and the second monomer unit in a preferred embodiment of the present disclosure.
The rubber composition for a bladder is preferably at least one binary copolymer selected from the group consisting of VdF/HFP copolymer, VdF/2,3,3,3-tetrafluoropropylene copolymer, and VdF/PAVE copolymer, and particularly preferably at least one binary copolymer selected from the group consisting of VdF/HFP copolymer and VdF/2,3,3,3-tetrafluoropropylene copolymer.

The number average molecular weight Mn of the rubber composition for a bladder is preferably in the range of 5,000 to 500,000, more preferably in the range of 10,000 to 500,000, and particularly preferably in the range of 20,000 to 500,000.

The rubber composition for a bladder can be manufactured by the conventionally known method such as emulsion polymerization, suspension polymerization, solution polymerization, or the like. A polymerization method using an iodine (bromine) compound known as iodine (bromine) transfer polymerization, in particular, allows production of fluororubber having a relatively narrow range of molecular weight distribution.

Further, in a case where viscosity of the fluororubber composition is to be lowered, for example, the fluororubber (A) described above (which fluororubber will occasionally be referred to as "the fluororubber (A)" hereinafter) may be blended with a fluororubber of another type. Examples of the fluororubber of another type include low-molecular weight liquid fluororubber (the number average molecular weight is ≥ 1000), low-molecular weight fluororubber having the number average molecular weight of around 10,000, fluororubber having the number average molecular weight in the range of 100,000 to 200,000, and the like.

The fluororubber (A) of the present disclosure has Mooney viscosity at 100 °C preferably in the range of 20 to 200 and more preferably in the range of 30 to 180 in terms of achieving good workability. Mooney viscosity is measured according to JIS K6300.

### Carbon black

The rubber composition for a bladder may further contain, in addition to the fluororubber described above, carbon black having a nitrogen adsorption specific surface area (N₂SA) preferably in the range of 25 m²/g to 180 m²/g. It is possible to improve tensile elongation at break and strength at high temperature, of a resulting vulcanizing bladder, by including carbon black having a nitrogen adsorption specific surface area (N₂SA) in the range of 25 m²/g to 180 m²/g in the rubber composition for a bladder.

Carbon black is classified into furnace black, acetylene black, thermal black, channel black, graphite, and the like, based on differences in production methods thereof. Further, all of the commercially available carbon black is classified into carbon black for rubber, carbon black for color, and conductive carbon black, based on differences in applications thereof. Specific examples of the carbon black for rubber include SAF-HS (N₂SA: 142 m²/g, DBP: 130 ml/100g), SAF (N₂SA: 142 m²/g, DBP: 115 ml/100g), N234 (N₂SA: 126 m²/g, DBP: 125 ml/100g), ISAF (N₂SA: 119 m²/g, DBP: 114 ml/100g), ISAF-LS (N₂SA: 106 m²/g, DBP: 75 ml/100g), ISAF-HS (N₂SA : 99 m²/g, DBP: 129 ml/100g), N339 (N₂SA: 93 m²/g, DBP: 119 ml/100g), HAF-LS (N₂SA: 84 m²/g, DBP 75 ml/100g), HAF-HS (N₂SA: 82 m²/g, DBP: 126 ml/100g), HAF (N₂SA: 79 m²/g, DBP: 101 ml/100g), N351 (N₂SA: 74 m²/g, DBP: 127 ml/100g), LI-HAF (N₂SA: 74 m²/g, DBP: 101 ml/100g), MAF-HS (N₂SA: 56 m²/g, DBP: 158ml/100g), MAF (N₂SA: 49 m²/g, DBP: 133 ml/100g), FEF-HS (N₂SA: 42 m²/g, DBP: 160 ml/100g), FEF (N₂SA: 42 m²/g, DBP: 115 ml/100g), SRF-HS (N₂SA: 32 m²/g, DBP: 140 ml/100g), SRF-HS (N₂SA: 29 m²/g, DBP: 152 ml/100g), GPF (N₂SA: 27 m²/g, DBP: 87 ml/100g), SRF (N₂SA: 27 m²/g, DPB: 68 ml/100g), and the like. Examples of the carbon black for color include HCC, MCC, RCC, LCC, HCF, MCF, RCF, LCF, LFF, the respective types of acetylene black, and the like, according to the classification in the Handbook of Carbon black, the third edition, published in 1995. SAF-HS, SAF, N234, ISAF, ISAF-LS, ISAF-HS, N339, HAF-LS, HAF-HS, HAF, N351, LI-HAF and MAF-HS are preferable among these examples. The aforementioned examples of carbon black may be used by either a single type or two or more types in combination. It should be noted that the N₂SA and DBP values of the carbon black examples described above may slightly (around + 5 points) vary depending on the types of references and thus are not limited to the aforementioned specific values.

Particularly preferable examples of the aforementioned carbon black include carbon black having a nitrogen adsorption specific surface area (N₂SA) in the range of 25 m²/g to 180 m²/g and dibutyl phthalate (DBP) oil absorption in the range of 40 ml/100 g to 180 ml/100 g.
When the nitrogen adsorption specific surface area (N₂SA) is too small, tensile elongation at break of a crosslinked rubber product for a bladder (a crosslinked product obtained by crosslinking the rubber composition for a bladder) tends to decrease. In view of this, the nitrogen adsorption specific surface area (N₂SA) is preferably ≥ 50 m²/g, more preferably ≥ 70 m²/g, further more preferably ≥ 90 m²/g, and particularly preferably ≥ 110 m²/g. The upper limit of the N₂SA is preferably 180 m²/g in consideration of commercial availability of the product.
When the dibutyl phthalate (DBP) oil absorption is too small, tensile elongation at break of the crosslinked rubber product for a bladder tends to decrease. In view of this, the DBP oil absorption is preferably ≥ 50 ml/100 g, more preferably ≥ 60 ml/100 g, further more preferably ≥ 80 ml/100 g, and particularly preferably ≥ 100 ml/100 g. The upper limit of the DBP oil absorption is preferably 175 ml/100 g and more preferably 170 ml/100 g in consideration of commercial availability of the product.

A content of the carbon black in the rubber composition for a bladder is preferably in the range of 5 parts by mass to 65 parts by mass with respect to 100 parts by mass of the fluororubber. When the content of the carbon black is too large, hardness of the crosslinked rubber product for a bladder tends to increase. When the content of carbon black is too small, tensile elongation at break of the crosslinked rubber product for a bladder tends to decrease. The content of the carbon black is more preferably ≥ 6 parts by mass, further more preferably ≥ 10 parts by mass, and more preferably ≤ 55 parts by mass, further more preferably ≤ 50 parts by mass, yet further more preferably ≤ 49 parts by mass, and particularly preferably ≤ 45 parts by mass, with respect to 100 parts by mass of the fluororubber, in terms of achieving good overall balance among the relevant physical properties.

At least one selected from the group consisting of fatty oil and aliphatic hydrocarbon
The rubber composition for a bladder preferably further contains, in addition to the fluororubber and the carbon black described above, at least one selected from the group consisting of fatty oil and aliphatic hydrocarbon (which at least one substance will occasionally be referred to as "compound (A)" hereinafter). It is possible to improve tensile elongation at break and strength at high temperature, of the vulcanizing bladder, by including the compound (A) in the rubber composition for a bladder.

It is preferable that the compound (A) has the boiling point of ≥ 250 °C under the atmospheric pressure and the melting point or the freezing point of ≤ 15 °C. The compound (A), having the boiling point under the atmospheric pressure in the aforementioned range, does not evaporate from the crosslinked rubber product for a bladder even in a high temperature environment, whereby the resulting vulcanizing bladder can maintain satisfactory elongation when it is heated.
The boiling point under the atmospheric pressure of the compound (A) is preferably ≥ 280 °C and more preferably ≥ 300 °C. The upper limit of the aforementioned boiling point is not particularly limited and may be 700 °C. In a case where the boiling point does not exist under the atmospheric pressure, the temperature at which a decrease in weight of a sample reaches 10 % of the total weight thereof, determined by heating the sample in the ambient atmosphere from the room temperature by a thermogravimetric analyzer, is regarded as the boiling point of the compound (A). Further, it is possible to obtain a vulcanizing bladder having satisfactorily low hardness and exhibiting satisfactorily large tensile elongation at break, by including in the rubber composition for a bladder the compound (A) having the melting point or the freezing point in the aforementioned range. In this regard, the melting point or the freezing point of the compound (A) is preferably ≤ 10 °C and more preferably ≤ 0 °C. Use of the compound (A) having too high melting point or freezing point may increase hardness of the crosslinked rubber product for a bladder. The lower limit of the melting point or the freezing point of the compound (A) is not particularly limited and may be -100 °C.

A content of the compound (A) in the rubber composition for a bladder is preferably in the range of 1 parts by mass to 30 parts by mass with respect to 100 parts by mass of the fluororubber. It is possible to obtain a crosslinked rubber product for a bladder having satisfactorily low hardness and exhibiting satisfactorily large tensile elongation at break by including the compound (A) at the aforementioned content range in the rubber composition for a bladder. The content of the compound (A) is more preferably ≥ 3 parts by mass, further more preferably ≥ 5 parts by mass, and particularly preferably ≥ 8 parts by mass, in terms of obtaining a crosslinked rubber product for a bladder exhibiting still larger tensile elongation at break and having still lower hardness than otherwise. The content of the compound (A) is more preferably ≤ 25 parts by mass, further more preferably ≤ 20 parts by mass, and particularly preferably ≤ 15 parts by mass, in terms of obtaining a crosslinked rubber product for a bladder exhibiting tensile strength at break which is high enough for practical use.

The aliphatic hydrocarbon is a compound or a mixture of two or more compounds, selected from a group of compounds represented by general formula (X):

CₘHₙ(X)

(In the general formula, m represents an integer and n represents an even number which is ≤ (2m + 2).)
Examples of the aliphatic hydrocarbon include saturated aliphatic hydrocarbon and unsaturated aliphatic hydrocarbon. Specific examples of the saturated aliphatic hydrocarbon include liquid paraffin, naphthene, and the like. Specific examples of the unsaturated aliphatic hydrocarbon include terpenes and the like. The aforementioned examples of the aliphatic hydrocarbon may be used by either a single type or two or more types in combination. Use of at least one aliphatic hydrocarbon belonging to the aforementioned saturated aliphatic hydrocarbon is preferable because the saturated aliphatic hydrocarbon is chemically stable. Use of liquid paraffin is particularly preferable in this regard.

The compound (A) described above may include a fatty oil having the boiling point of ≥ 250 °C under the atmospheric pressure and the melting point or the freezing point of ≤ 15 °C.
The fatty oil, having the boiling point under the atmospheric pressure in the aforementioned range, does not evaporate from the crosslinked rubber product for a bladder even in a high temperature environment, whereby the resulting vulcanizing bladder can maintain satisfactory elongation when it is heated. The boiling point under the atmospheric pressure of the fatty oil is preferably ≥ 280 °C and more preferably ≥ 300 °C. The upper limit of the boiling point of the fatty oil is not particularly limited and may be 700 °C. In a case where the boiling point does not exist under the atmospheric pressure, the temperature at which a decrease in weight of a sample reaches 10 % of the total weight thereof, determined by heating the sample in the ambient atmosphere from the room temperature by a thermogravimetric analyzer, is regarded as the boiling point of the fatty oil.
Further, it is possible to obtain a crosslinked rubber product for a bladder having satisfactorily low hardness and exhibiting satisfactorily large tensile elongation at break, by including the fatty oil having the melting point or the freezing point in the aforementioned range in the compound (A). In this regard, the melting point or the freezing point of the fatty oil is preferably ≤ 10 °C and more preferably ≤ 0 °C. Use of the fatty oil having too high melting point or freezing point may increase hardness of the crosslinked rubber product for a bladder. The lower limit of the melting point or the freezing point of the fatty oil is not particularly limited and may be -100 °C.

The fatty oil is preferably at least one selected from the group consisting of a non-dying oil and a semi-drying oil in terms of obtaining a crosslinked rubber product for a bladder having satisfactorily low hardness and exhibiting satisfactorily large tensile elongation at break. Examples of the non-drying oil include caster oil, rapeseed oil, peanut oil, olive oil, and the like. Examples of the semi-drying oil include soybean oil, cotton oil, corn oil, sunflower oil, and the like. The fatty oil is more preferably at least one selected from the group consisting of caster oil, rapeseed oil, peanut oil, soybean oil, and cotton oil, and further more preferably caster oil, among these examples.

A content of the fatty oil in the rubber composition for a bladder is preferably in the range of 1 parts by mass to 30 parts by mass with respect to 100 parts by mass of the fluororubber. It is possible to obtain a crosslinked rubber product for a bladder having satisfactorily low hardness and exhibiting satisfactorily large tensile elongation at break by including the fatty oil at the aforementioned content range in the rubber composition for a bladder. The content of the fatty oil is more preferably ≥ 3 parts by mass, further more preferably ≥ 5 parts by mass, and particularly preferably ≥ 8 parts by mass, in terms of obtaining a crosslinked rubber product for a bladder exhibiting still larger tensile elongation at break and having still lower hardness than otherwise. The content of the fatty oil is more preferably ≤ 25 parts by mass, further more preferably ≤ 20 parts by mass, and particularly preferably ≤ 15 parts by mass, in terms of obtaining a crosslinked rubber product for a bladder exhibiting tensile strength at break which is high enough for practical use.

### Crosslinking agent, crosslinking accelerator

The rubber composition for a bladder further contains, in addition to the fluororubber, the carbon black, and the compound (A) described above, a crosslinking agent and preferably a crosslinking accelerator. Inclusion of the crosslinking agent and the crosslinking accelerator in the rubber composition for a bladder improves mold-releasability of a resulting vulcanizing bladder.

Types of the crosslinking agent and the crosslinking accelerator may be appropriately selected in accordance with types of the fluororubber to be crosslinked and the crosslinking system (e.g. presence/absence of a crosslinking group, type of the crosslinking group, type of the copolymer composition, and the like), details of the application and use of a resulting crosslinked product, mixing and kneading conditions, and the like.
The crosslinking system, which can be employed, is a polyol crosslinking system, polyamine crosslinking system, oxazole crosslinking system, thiazole crosslinking system, imidazole crosslinking system, or triazine crosslinking system.

The aforementioned polyol crosslinking system, having a carbon-oxygen bond at a crosslinking point, is advantageous in that the system experiences relatively little compression permanent set and is excellent in moldability.

In respect of a polyol-based crosslinking agent, the polyol compounds conventionally known as crosslinking agents of fluororubber can be used and example thereof include a polyhydroxy compound. A polyhydroxy aromatic compound, in particular, is suitably employed because it is excellent in heat resistance.

Type of the polyhydroxy aromatic compound is not particularly restricted and examples thereof include 2,2-bis(4-hydroxyphenyl)propane (which will be referred to as "bisphenol A" hereinafter), 2,2-bis(4-hydroxyphenyl)perfluoropropane (which will be referred to as "bisphenol AF" hereinafter), resorcin, 1,3-dihydroxybenzen, 1,7-dihydroxynaphthalene, 2,7-dihydroxynaphthalene, 1,6-dihydroxynaphthalene, 4,4'-dihydroxybiphenyl, 4,4'-dihydroxystilbene, 2,6-dihydroxyanthracene, hydroquinone, catechol, 2,2-bis(4-hydroxyphenyl)butane (which will be referred to as "bisphenol B" hereinafter), 4,4-bis(4-hydroxyphenyl)valeric acid, 2,2-bis(4-hydroxyphenyl)tetrafluorodichloropropane, 4,4'-dihydroxydiphenylsulfone, 4,4'-dihydroxydiphenylketone, tri(4-hydroxyphenyl)methane, 3,3' -5,5' -tetrachlorobisphenol A, 3,3'-5,5'-tetrabromobisphenol A, and the like. These examples of the polyhydroxy aromatic compound may take the form of alkali metal salts, alkali earth metal salts thereof or the like. However, it is preferable that those metal salts are not used in a case where copolymers are to be coagulated by using an acid.

The polyhydroxy compound is preferable among the examples described above because a crosslinked rubber product for a bladder, obtained therefrom, exhibits relatively little compression permanent set and is excellent in moldability. In this connection, the polyhydroxy aromatic compound is more preferable and bisphenol AF is further more preferable in terms of excellent heat resistance.

In general, the polyol crosslinking system preferably includes a crosslinking accelerator. Use of the crosslinking accelerator facilitates i) generation of double bond in a molecule by dehydrofluorination of a fluororubber main chain and ii) addition of the polyhydroxy compound to the double bond thus generated, thereby facilitating the overall crosslinking reaction.

An onium compound is generally used as the crosslinking accelerator of the polyol crosslinking system. Type of the onium compound is not particularly restricted and examples thereof include an ammonium compound such as a quaternary ammonium salt, a phosphonium compound such as a quaternary phosphonium salt, an oxonium compound, a sulfonium compound, a cyclic amine, a monofunctional amine compound, and the like. A quaternary ammonium salt and a quaternary phosphonium salt are preferable among these examples.

Type of the quaternary ammonium salt is not particularly restricted and examples thereof include 8-methyl-1,8-diazabycyclo[5,4,0]-7-undecenium chloride, 8-methyl-1,8-diazabycyclo[5,4,0]-7-undecenium iodide, 8-methyl-1,8-diazabycyclo[5,4,0]-7-undecenium hydroxide, 8-methyl-1,8-diazabycyclo[5,4,0]-7-undecenium methyl sulfate, 8-ethyl-1,8-diazabycyclo[5,4,0]-7-undecenium bromide, 8-propyl-1,8-diazabycyclo[5,4,0]-7-undecenium bromide, 8-dodecyl-1,8-diazabycyclo[5,4,0]-7-undecenium chloride, 8-dodecyl-1,8-diazabycyclo[5,4,0]-7-undecenium hydroxide, 8-eicosyl-1,8-diazabycyclo[5,4,0]-7-undecenium chloride, 8-tetracosyl-1,8-diazabycyclo[5,4,0]-7-undecenium chloride, 8-benzyl-1,8-diazabycyclo[5,4,0]-7-undecenium chloride (which will be referred to as "DBU-B" hereinafter), 8-benzyl-1,8-diazabycyclo[5,4,0]-7-undecenium hydroxide, 8-phenethyl-1,8-diazabycyclo[5,4,0]-7-undecenium chloride, 8-(3-phenylpropyl)-1,8-diazabycyclo[5,4,0]-7-undecenium chloride, and the like. DBU-B is preferable among these examples in terms of crosslinking properties thereof and physical properties of a resulting crosslinked product.

Type of the quaternary phosphonium salt is not particularly restricted and examples thereof include tetrabutylphosphonium chloride, benzyltriphenylphosphonium chloride (which will be referred to as "BTPPC" hereinafter), benzyltrimethylphosphonium chloride, benzyltributylphosphonium chloride, tributylallylphosphonium chloride, tributyl-2-methoxypropylphosphonium chloride, benzylphenyl(dimethylamino)phosphonium chloride, and the like. Benzyltriphenylphosphonium chloride (BTPPC) is preferable among these examples in terms of crosslinking properties thereof and physical properties of a resulting crosslinked product.

Further, a solid solution of a quaternary ammonium salt/a quaternary phosphonium salt and bisphenol AF, a chlorine-free crosslinking accelerator disclosed in JP 11-147891 Laid-Open, or the like can be used as the aforementioned crosslinking accelerator.

A content of the polyol-based crosslinking agent is preferably in the range of 0.01 to 10 parts by mass and more preferably in the range of 0.1 to 7 parts by mass with respect to 100 parts by mass of the fluororubber. When the content of the polyol-based crosslinking agent is less than 0.01 parts by mass, crosslinking of the fluororubber (A) may not proceed in a satisfactory manner. When the content of the polyol-based crosslinking agent exceeds 10 parts by mass, overall balance among the relevant physical properties may deteriorate.

A content of the crosslinking accelerator for use in the polyol crosslinking system is preferably in the range of 0.01 to 8 parts by mass and more preferably in the range of 0.02 to 5 parts by mass with respect to 100 parts by mass of the fluororubber. When the content of the crosslinking accelerator is less than 0.01 parts by mass, crosslinking of the fluororubber (A) may not proceed in a satisfactory manner. When the content of the crosslinking accelerator exceeds 8 parts by mass, overall balance among the relevant physical properties may deteriorate.

The aforementioned polyamine crosslinking system, having a carbonnitrogen double bond at a crosslinking point, is advantageous in that the system provides a resulting crosslinked product with excellent dynamic mechanical properties. However, the polyamine crosslinking system using a polyamine-based crosslinking agent tends to experience larger compression permanent set than the systems using the polyol-based crosslinking agent or the peroxide-based crosslinking agent.

Examples of the polyamine-based crosslinking agent include a polyamine compound such as hexamethylenediamine carbamate, N,N'-dicinnamylidene-1,6-hexamethylenediamine, 4,4'-bis(amonocyclohexyl)methane carbamate, and the like. N,N'-dicinnamylidene-1,6-hexamethylenediamine is preferable among these examples.

A content of the polyamine-based crosslinking agent is preferably in the range of 0.01 to 10 parts by mass and more preferably in the range of 0.2 to 7 parts by mass with respect to 100 parts by mass of the fluororubber. When the content of the polyamine-based crosslinking agent is less than 0.01 parts by mass, crosslinking of the fluororubber may not proceed in a satisfactory manner. When the content of the polyamine-based crosslinking agent exceeds 10 parts by mass, overall balance among the relevant physical properties may deteriorate.

In the present disclosure, the peroxide crosslinking system or the polyol crosslinking system is preferable and, whichever system is selected, a crosslinking agent suitable for the crosslinking system thus selected should be used. The crosslinking agent for use in the peroxide crosslinking system is particularly preferable in this regard.

### Other components

The rubber composition for a bladder may further optionally contain, in addition to the fluororubber, the carbon black, the compound (A), the crosslinking agent and the crosslinking accelerator described above, other components such as filler, processing aid, plasticizer, coloring agent, tackifier, adhesive aid, acid acceptor, pigment, flame retardant, lubricant, light stabilizer, weatherproofness stabilizer, antistatic agent, UV absorbing agent, antioxidant, mold-releasing agent, foaming agent, flavoring agent, oil, softener, as well as other polymers such as polyethylene, polypropylene, polyamide, polyester, polyurethane, and the like, unless addition thereof adversely affects the effect of the present disclosure.

Examples of the filler include: a metal oxide such as calcium oxide, titanium oxide, aluminum oxide, magnesium oxide; a metal hydroxide such as magnesium hydroxide, aluminum hydroxide, calcium hydroxide; a carbonate salt such as magnesium carbonate, aluminum carbonate, calcium carbonate, barium carbonate; a silicate salt such as magnesium silicate, calcium silicate, sodium silicate, aluminum silicate; a sulfate salt such as aluminum sulfate, calcium sulfate, barium sulfate; synthetic hydrotalcite; a metal sulfide such as molybdenum disulfide, iron sulfide, copper sulfide; diatomaceous earth; asbestos; lithopone (zinc sulfide/barium sulfide);graphite; carbon fluoride; calcium fluoride; coke; quartz fine powder; talc; mica powder; wollastonite; carbon fiber; aramid fiber; whisker of various types; glass fiber; organic reinforcing agent; organic filler; polytetrafluoroethylene; mica; silica; celite; clay; and the like. Although these examples may be added at any stage in the mixing and kneading process described below, they are preferably added when fluororubber and carbon black are mixed and kneaded in a sealed-type kneader or a roll kneader.

Examples of the processing aid include: a higher fatty acid such as stearic acid, oleic acid, palmitic acid, lauric acid; a higher fatty acid salt such as sodium stearate, zinc stearate; a higher fatty acid amide such as amide stearate, amide oleate; a higher fatty acid ester such as ethyl oleate; petroleum-based wax such as carnauba wax, ceresin wax; polyglycol such as ethylene glycol, glycerin, diethylene glycol; an aliphatic hydrocarbon such as Vaseline, paraffin; silicone-based oil; silicone-based polymer; low-molecular weight polyethylene; phthalic acid esters; phosphoric acid esters; rosin; (halogenated) dialkylamine; a surfactant; a sulfone compound; a fluorine-based auxiliary, an organic amine compound; and the like.
The organic amine compound and the acid acceptor are preferable among these examples because they improve reinforcing properties when they coexist with fluororubber and carbon black in a mixing and kneading process by using a sealed-type kneader or a roll kneader.

Preferable examples of the organic amine compound include a primary amine represented by R¹NH₂, a secondary amine represented by R¹R²NH, and a tertiary amine represented by R¹R²R³N. R¹, R² and R³ are of either the same type or different types and each of them is preferably a C₁₋₅₀ alkyl group which may have any of a benzene ring, a double bond, and a conjugated double bond as a functional group. The alkyl group may be either normal or branched.

Examples of the primary amine include coconut amine, octylamine, laurylamine, stearylamine, oleylamine, tallowamine, 17-phenyl-heptadecylamine, octadeca-7,11-dienylamine, octadeca-7,9-dienylamine, octadec-9-enylamine, 7-methyl-octadec-7-enylamine, and the like. Examples of the secondary amine include distearylamine, and the like. Examples of the tertiary amine include dimethyloctylamine, dimethyldecylamine, dimethyllaurylamine, dimethylmyristylamine, dimethylpalmitylamine, dimethylstearylamine, dimethylbehenylamine, and the like. An amine having around 20 carbon atoms, a primary amine in particular, is preferable among these examples in terms of commercial availability and good reinforcing properties thereof.

A content of the organic amine compound is preferably in the range of 0.01 to 5 parts by mass with respect to 100 parts by mass of the fluororubber. A too large content of the organic amine compound tends to disturb smooth mixing and kneading and a too small content of the organic amine compound tends to deteriorate reinforcing properties exhibited in a resulting product. A content of the organic amine compound is more preferably ≥ 0.1 parts by mass with respect to 100 parts by mass of the fluororubber in terms of achieving good reinforcing properties in a resulting product and ≤ 4 parts by mass with respect to 100 parts by mass of the fluororubber in terms of achieving good overall balance between the smooth mixing and kneading and the satisfactory reinforcing properties exhibited in a resulting product.

Examples of the acid acceptor include: a metal hydroxide such as calcium hydroxide; a metal oxide such as magnesium oxide, zinc oxide (zinc white); hydrotalcite; and the like, among those described above, in terms of achieving good reinforcing properties in a resulting product. Zinc white is particularly preferable.

A content of the acid acceptor is preferably in the range of 0.01 to 10 parts by mass with respect to 100 parts by mass of the fluororubber. A too large content of the acid acceptor tends to deteriorate physical properties and a too small content of the acid acceptor tends to deteriorate reinforcing properties exhibited in a resulting product. A content of the acid acceptor is more preferably ≥ 0.1 parts by mass with respect to 100 parts by mass of the fluororubber in terms of achieving good reinforcing properties in a resulting product. Further, a content of the acid acceptor is more preferably ≤ 8 parts by mass and further more preferably ≤ 5 parts by mass with respect to 100 parts by mass of the fluororubber in terms of achieving good overall balance between the smooth mixing and kneading and the satisfactory reinforcing properties exhibited in a resulting product.

In respect of the rubber composition for a bladder, provided that G' (1%) represents shear elasticity at dynamic strain: 1% and G' (100%) represents shear elasticity at dynamic strain: 100% of the rubber composition in an unvulcanized state, measured in a dynamic viscoelasticity test by a rubber process analyzer (RPA) under the conditions of the measurement frequency: 1 Hz, the measurement temperature: 100 °C, respectively, and that δG' represents the difference between G' (1%) and G' (100%), i.e. (G' (1%) - G' (100%)), 6G' is in the range of ≥ 120 kPa and ≤ 3000 kPa. It is possible to further enhance an effect of suppressing the migration of sulfur from the high sulfur concentration rubber member to a vulcanizing bladder by setting δG' to be within the aforementioned range. Moreover, it is possible to obtain advantageous effects in terms of physical properties in a normal state, tensile characteristics at high temperature, and the like of the rubber composition for a bladder by setting δG' to be within the aforementioned range.

The δG' is employed as an index for evaluating reinforcing properties of the rubber composition and calculated based on the data measured in a dynamic viscoelasticity test using a rubber process analyzer.

The δG' is preferably ≥ 150 kPa, more preferably ≥ 160 kPa, further more preferably ≥ 300 kPa, particularly preferably ≥ 300 kPa, and most preferably ≥ 500 kPa, in terms of achieving satisfactory physical properties in a normal state, tensile characteristics at high temperature, and the like of the rubber composition for a bladder. Further, The δG' is preferably ≤ 2800 kPa and more preferably ≤ 2500 kPa in terms of achieving satisfactory physical properties in a normal state, hardness, viscosity in extrusion molding, tensile characteristics at high temperature, and the like of the rubber composition for a bladder.

### (Crosslinked rubber product for a bladder)

A crosslinked rubber product for a bladder can be obtained by subjecting the rubber composition for a bladder of the present disclosure to crosslinking.

A method for crosslinking the rubber composition for a bladder may be appropriately selected in accordance with an application and examples of the method which can be employed include the conventional crosslinking methods such as those in combination with a molding method like extrusion molding, winding-and-steaming molding and those using crosslinking drums. The method for crosslinking the rubber composition for a bladder may further involve oven crosslinking when the intended application of a crosslinked product requires secondary crosslinking of the product.

Further, provided that E" represents a loss elastic modulus of the crosslinked rubber product for a bladder, measured in a dynamic viscoelasticity test under the conditions of measurement mode: tensile mode, distance between chucks: 20 mm, tensile strain: 1%, measurement frequency: 10 Hz, static tensile force when strains are dispersed under a constant static load condition: 157 cN, and measurement temperature: 160 °C, the crosslinked rubber product for a bladder is particularly excellent in physical properties in a normal state, tensile characteristics at high temperature, and the like thereof when the loss elastic modulus E" is in the range of ≥ 400 kPa and ≤ 6000 kPa. The lower limit of the loss elastic modulus E" is preferably ≥ 420 kPa and more preferably ≥ 430 kPa and the upper limit of the loss elastic modulus E" is preferably ≤ 5900 kPa and more preferably ≤ 5800 kPa.

Yet further, provided that E' represents a storage elastic modulus of the crosslinked rubber product for a bladder, measured in a dynamic viscoelasticity test under the conditions of measurement mode: tensile mode, distance between chucks: 20 mm, measurement temperature: 160 °C, tensile strain: 1%, static tensile force when strains are dispersed under a constant static load condition: 157 cN, and measurement frequency: 10 Hz, the storage elastic modulus E' is preferably in the range of ≥ 1500 kPa and ≤ 20,000 kPa in terms of further improving the tensile characteristics at high temperature of the crosslinked rubber product for a bladder. The lower limit of the storage elastic modulus E' is preferably ≥ 1600 kPa and more preferably ≥ 1800 kPa and the upper limit of the storage elastic modulus E' is preferably ≤ 19,000 kPa and more preferably ≤ 18,000 kPa.

The crosslinked rubber product for a bladder preferably has tensile elongation at break in the range of 100 % to 700 % at 160 °C, so that the crosslinked rubber product for a bladder is suitable for use in an environment at high temperature. For the same reasons, the lower limit of the tensile elongation at break is more preferably ≥ 110 % and further more preferably ≥ 120 % and the upper limit of the tensile elongation at break is more preferably ≤ 680 % and further more preferably ≤ 650 %.

Further, the crosslinked rubber product for a bladder has tensile strength at break at 160 °C of preferably ≥ 1 MPa, more preferably ≥ 1.5 MPa, particularly preferably ≥ 2 MPa, and preferably ≤ 30 MPa, particularly preferably ≤ 28 MPa, so that the crosslinked rubber product for a bladder is suitable for use in an environment at high temperature. The tensile strength at break and the tensile elongation at break are measured, respectively, by using No. 6 dumbbell according to JIS-K6251.

Yet further, the crosslinked rubber product for a bladder has tear strength at 160 °C preferably in the range of 3 to 30 kN/m, more preferably ≥ 4 kN/m, particularly preferably ≥ 5 kN/m, and more preferably ≤ 29 kN/m, particularly preferably ≤ 28 kN/m, so that the crosslinked rubber product for a bladder is suitable for use in an environment at high temperature or the like.

Yet further, the crosslinked rubber product for a bladder has tensile elongation at break at 200 °C preferably in the range of 100 % to 700 %, more preferably ≥ 110 %, particularly preferably ≥ 120 %, and more preferably ≤ 680 %, particularly preferably ≤ 650 %, so that the crosslinked rubber product for a bladder is suitable for use in an environment at high temperature or the like.

Yet further, the crosslinked rubber product for a bladder has tensile strength at break at 200 °C preferably in the range of 1 MPa to 30 MPa, more preferably ≥ 1.5 MPa, particularly preferably ≥ 2 MPa, and more preferably ≤ 29 MPa, particularly preferably ≤ 28 MPa, so that the crosslinked rubber product for a bladder is suitable for use in an environment at high temperature or the like.

Yet further, the crosslinked rubber product for a bladder has tear strength at 200 °C preferably in the range of 3 to 30 kN/m (more preferably ≥ 4 kN/m, particularly preferably ≥ 5 kN/m), so that the crosslinked rubber product for a bladder is suitable for use in an environment at high temperature or the like.

### (Tire)

A tire is obtained by the tire production method described above.

The tire obtained by the tire production method of the present disclosure, is capable of retaining intended physical properties without experiencing a decrease in sulfur content during vulcanization.

A small amount of the fluororubber contained in the vulcanizing bladder is naturally transferred to the innermost surface of the tire. It is therefore possible to employ the presence/absence of the fluororubber at the innermost surface of a tire as an index for judging whether the tire was obtained by the tire production method of the present disclosure or not.

### EXAMPLES

The present disclosure will be described further in detail by Examples hereinafter. The present disclosure is not limited by any means to these Examples.

### (Preparation of vulcanizing bladder)

### (1) Bladder containing fluororubber

A vulcanizing bladder containing fluororubber was prepared by using a rubber composition having a formulation shown in Table 1 below, for a bladder.

A fluororubber component contained in the rubber composition for a bladder was prepared under the following conditions, specifically by: charging 1.7 L of pure water, 0.17 g of a 50 % aqueous solution of CH₂ = CFCF₂OCF(CF₃)CF₂OCF(CF₃)COONH₄, and 6.8 g of a 50 % aqueous solution of F(CF₂)₅COONH₄ in a 3L autoclave vessel made of stainless steel, with thoroughly substituting gas in the system with nitrogen gas; raising the temperature in the system to 80 °C with stirring at 600 rpm and then injecting monomers into the vessel such that the initial monomer composition in the vessel exhibited VdF/HFP = 34/66 and the internal pressure = 1.52 MPa; then injecting into the vessel a solution of a polymerization initiator, obtained by dissolving 60 mg of ammonium persulfate (APS) in 5 ml of pure water, with nitrogen gas, thereby initiating a polymerization reaction; injecting, when the internal pressure dropped to 1.42 MPa as the polymerization proceeded, an additional mixture of monomers having a mole ratio of VdF/HFP = 68/32 until the internal pressure increased to 1.52 MPa; injecting a diiodo compound: (CF₂)₄I₂ (1.96 g) into the system at this stage; injecting an aqueous solution of APS (ABS: 60 mg/pure water: 5 ml) every three hours by nitrogen gas, so that the polymerization reaction continued, with repeated increase and decrease in internal pressure; discharging unreacted monomers from the system when the mixture of monomers had been added by 600 g in total; and cooling the autoclave vessel, thereby obtaining 2346 g of a dispersion of flurorubber having a solid component concentration: 26.3 mass %. The polymerization time was 7.9 hours. A copolymer composition of the fluororubber thus obtained was analyzed by NMR analysis and it was confirmed that VdF/HFP = 68/32 (a mole ratio) and Mooney viscosity (ML1 + 10 (100 °C)) = 69.

The shear elasticity G' (1%) of the rubber composition for a bladder, thus prepared, was 757 kPa and the difference δG' between the shear elasticity G' (1%) and the shear elasticity G' (100%), i.e. (G' (1%) - G' (100%)), was 568 kPa.

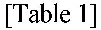

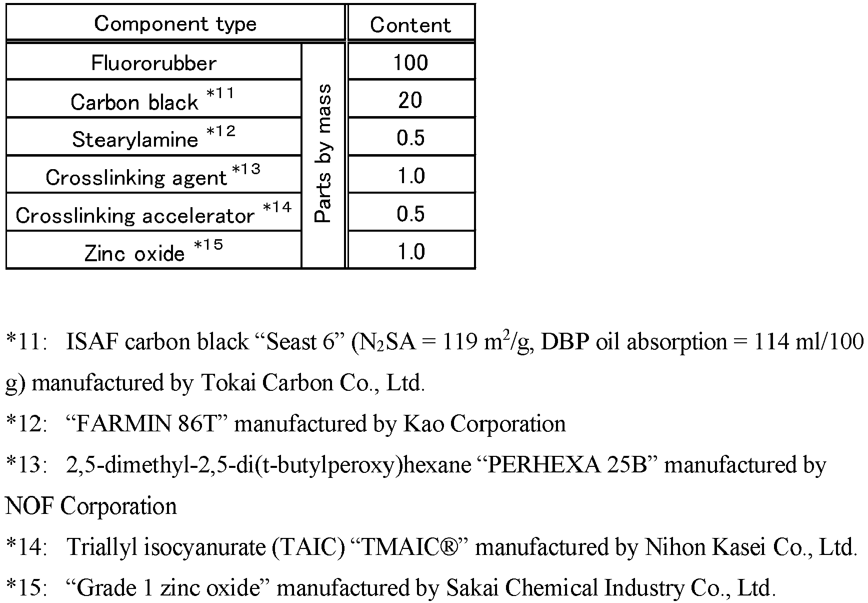

### (2) Vulcanizing bladder containing butyl rubber

A vulcanizing bladder containing butyl rubber was prepared by using a rubber composition having a formulation shown in Table 2 below, for a bladder. Contents of the respective components are expressed by parts by mass with respect to 100 parts by mass of the rubber component.

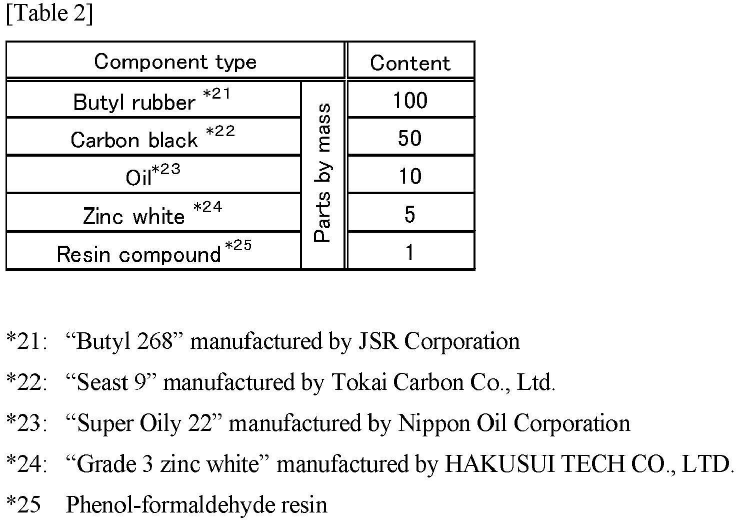

### < Example 1 (reference), Comparative Examples 1 to 3 >

Samples of unvulcanized tires were subjected to vulcanization by using the vulcanizing bladders thus prepared, to obtain samples of the vulcanized tires.

In respect of the samples of unvulcanized tires, sample tires (size: 195/60R15) each having a low sulfur concentration rubber member A (inner liner) and sample tires (size: 195/60R15) each having a high sulfur concentration rubber member B (chafer), i.e. two sample tire groups which differed from each other in sulfur content in rubber of an innermost surface member thereof, were prepared. The formulations of the respective rubber compositions used for the rubbers of the innermost surface members A, B of the two sample tire groups are shown in Table 3 and Table 4, respectively.

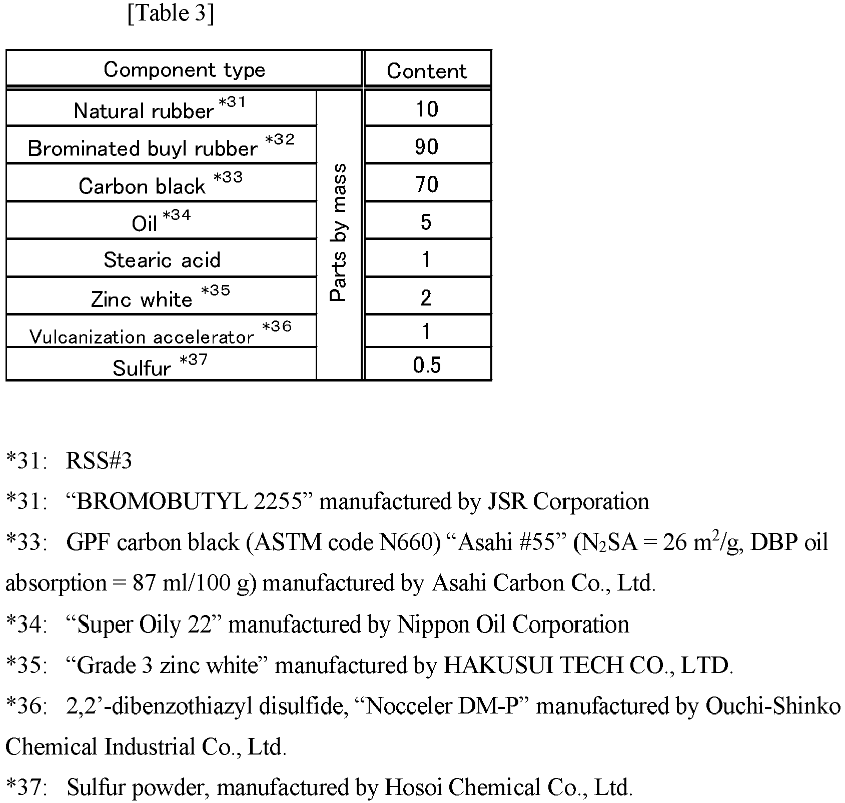

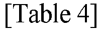

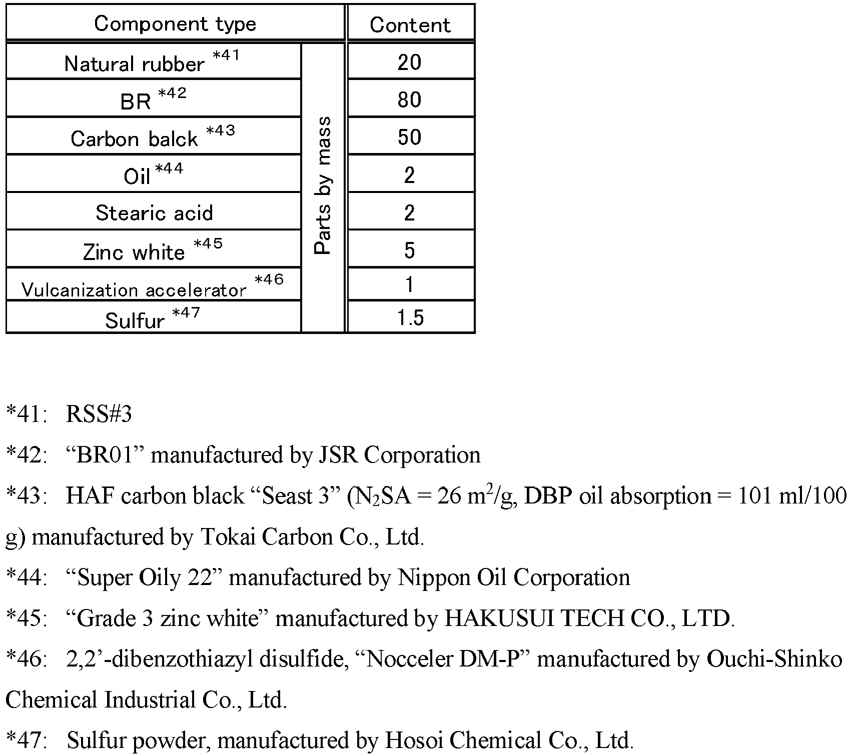

### < Evaluation >

For each of the vulcanized tire samples obtained by vulcanizing the unvulcanized tire samples, a sulfur content/concentration (%) in the sulfur-containing tire innermost surface rubber member was measured from the innermost surface of the tire toward the radially outer side in the depth direction thereof by using a scanning electron microscope (SEM) and an electron probe micro analyzer (EPMA). The measurement results are shown in Table 5 and FIG. 2.

**[Table 5]**

| | | Comparative Example 1 Comparative Example 2 | | Comparative Example 3 Example 1 | |
|---|---|---|---|---|---|
| Type of sulfur-containing tire innermost surface rubber member | | Low sulfur concentration rubber member A | | High sulfur concentration rubber member B | |
| Type of vulcanizing bladder | | Butyl rubber-containing bladder | Fluororubber-containing bladder | Butyl rubber-containing bladder | Fluororubber-containing bladder |
| Depth measured from the tire innermost surface (*µ*m) | 50 | 0.4 | 0.4 | 1.4 | 2.2 |
| | 100 | 0.4 | 0.3 | 1.6 | 2.1 |
| | 200 | 0.5 | 0.4 | 1.5 | 1.9 |
| | 300 | 0.4 | 0.4 | 1.6 | 1.9 |
| | 400 | 0.4 | 0.5 | 1.6 | 1.7 |
| | 500 | 0.4 | 0.4 | 1.8 | 16 |

It is understood from the results shown in Table 5 and FIG. 2 that the sample of Example 1 significantly reduces a decrease in sulfur concentration, i.e. inhibits the migration of sulfur from the tire innermost surface rubber member to the vulcanizing bladder, as compared with the sample of Comparative Example 3.
Further, it is understood from Comparative Examples 1 and 2, showing substantially no difference in sulfur concentration therebetween, magnitudes of sulfur migration hardly differ between use of the butyl rubber-containing bladder and use of the fluororubber-containing bladder when a sulfur content in the tire innermost surface of an unvulcanized tire is small.

### INDUSTRIAL APPLICABILITY

According to the present disclosure, it is possible to provide a tire production method which is capable of effectively inhibiting the migration of sulfur to a vulcanizing bladder in a process of vulcanizing an unvulcanized tire which is provided at an inner surface thereof with a member having a high concentration of sulfur. Further, it is possible to provide a tire which is capable of retaining intended physical properties without experiencing a decrease in sulfur content when it is vulcanized.

### REFERENCE SIGNS LIST

- 1: Vulcanizing bladder
- 20: Unvulcanized tire
- 20a: Tire innermost surface
- 30: Mold
- 40: Vulcanization device

## Claims

1. A tire production method, wherein it comprises a vulcanization process of vulcanizing an unvulcanized tire which is provided, in at least a portion of the innermost surface thereof, with a high sulfur concentration rubber member made of a rubber composition containing sulfur by ≥ 1.0 parts by mass with respect to 100 parts by mass of a rubber component,
wherein the vulcanization process employs a vulcanizing bladder (1) made of a rubber composition for a bladder, which rubber composition contains fluororubber by 50 mass % to 100 mass % and a crosslinking agent selected from the group consisting of a polyol-based crosslinking agent, a polyamine-based crosslinking agent, an oxazole-based crosslinking agent, a thiazole-based crosslinking agent, an imidazole-based crosslinking agent, and a triazine-based crosslinking agent,
wherein the high sulfur concentration rubber member is a chafer rubber and/or a reinforcing rubber for a runflat tire,
the fluororubber is a vinylidene fluoride-based fluororubber having a structural unit derived from vinylidene fluoride (VdF unit) and a structural unit derived from at least one selected from the group consisting of hexafluoropropylene (HFP), 2,3,3,3-tetrafluoropropylene, and perfluoro(alkylvinyl ether) (PAVE),
the mole ratio of the VdF unit with respect to the structural unit derived from at least one selected from the group consisting of HFP, 2,3,3,3-tetrafluoropropylene and PAVE in the fluororubber is in the range of 50/50 to 78/22, and
δG' is in the range of ≥ 120 kPa and ≤ 3000 kPa, wherein δG' represents (G' (1%) - G' (100%)), wherein G' (1%) represents shear elasticity at dynamic strain: 1% and G' (100%) represents shear elasticity at dynamic strain: 100% of the fluororubber in an unvulcanized state, measured in a dynamic viscoelasticity test by a rubber process analyzer (RPA) under the conditions of the measurement frequency: 1 Hz, the measurement temperature: 100 °C, respectively.

2. The tire production method of claim 1, wherein the rubber composition for a bladder contains fluororubber by substantially 100 mass %.

3. The tire production method of claim 1 or 2, wherein the high sulfur concentration rubber member is a chafer rubber.

4. The tire production method of any of claims 1 to 3, wherein the crosslinking agent is a polyol-based crosslinking agent or a polyamine-based crosslinking agent.

5. The tire production method of any of claims 1 to 4, wherein the rubber composition in a vulcanized state, constituting the vulcanizing bladder, has i) loss elastic modulus E" in the range of ≥ 400 kPa and ≤ 6000 kPa, provided that E" is measured in a dynamic viscoelasticity test under the conditions of measurement mode: tensile mode, distance between chucks: 20 mm, tensile strain: 1%, measurement frequency: 10 Hz, static tensile force when strains are dispersed under a constant static load condition: 157 cN, and measurement temperature: 160 °C and ii) storage elastic modulus E' in the range of ≥ 1500 kPa and ≤ 20,000 kPa, provided that E' is measured in a dynamic viscoelasticity test under the conditions of measurement mode: tensile mode, distance between chucks: 20 mm, measurement temperature: 160 °C, tensile strain: 1%, static tensile force when strains are dispersed under a constant static load condition: 157 cN, and measurement frequency: 10 Hz.

6. The tire production method of any of claims 1 to 5, wherein the rubber composition for a bladder further contains at least one selected from the group consisting of a fatty oil and an aliphatic hydrocarbon.

7. The tire production method of claim 6, wherein the fatty oil is at least one selected from the group consisting of a non-dying oil and a semi-drying oil.

8. The tire production method of any of claims 1 to 7, wherein the rubber composition for a bladder further contains carbon black, and
the carbon black has a nitrogen adsorption specific surface area (N₂SA) in the range of 25 m²/g to 180 m²/g and dibutyl phthalate (DBP) oil absorption in the range of 40 ml/100 g to 180 ml/100 g.

## Patentansprüche

1. Reifenherstellungsverfahren, wobei es einen Vulkanisationsprozess des Vulkanisierens eines nicht vulkanisierten Reifen umfasst, der, in mindestens einem Abschnitt der innersten Fläche davon, mit einem Kautschukelement mit hoher Schwefelkonzentration versehen ist, das aus einer Kautschukzusammensetzung besteht, die Schwefel mit ≥ 1,0 Masseanteile in Bezug auf 100 Masseanteile einer Kautschukkomponente enthält,
wobei der Vulkanisationsprozess einen Vulkanisierbalg (1) einsetzt, der aus einer Kautschukzusammensetzung für einen Balg besteht, dessen Kautschukzusammensetzung Fluorkautschuk mit 50 Masse-% bis 100 Masse-% und ein Vernetzungsmittel, das ausgewählt ist aus der Gruppe, die aus einem Vernetzungsmittel auf Polyol-Grundlage, einem Vernetzungsmittel auf Polyamin-Grundlage, einem Vernetzungsmittel auf Oxazol-Grundlage, einem Vernetzungsmittel auf Thiazol-Grundlage, einem Vernetzungsmittel auf Imidazol-Grundlage und einem Vernetzungsmittel auf Triazin-Grundlage besteht, enthält,
wobei das Kautschukelement mit hoher Schwefelkonzentration ein Kautschuk unter Wulstgewebe und/oder ein Verstärkungskautschuk für einen Notlaufreifen ist,
der Fluorkautschuk ein Fluorkautschuk auf Vinylidenfluorid-Grundlage ist, der eine von Vinylidenfluorid abgeleitete Struktureinheit (VdF-Einheit) und eine Struktureinheit, die von mindestens einem aus der Gruppe abgeleitet ist, die aus Hexafluorpropylen (HFP), 2,3,3,3-Tetrafluorpropylen und Perfluor(alkylvinylether) (PAVE) besteht, aufweist,
das Molverhältnis der VdF-Einheit in Bezug auf die Struktureinheit, die von mindestens einem aus der Gruppe abgeleitet ist, die aus HFP, 2,3,3,3-Tetrafluorpropylen und PAVE besteht, in dem Fluorkautschuk in dem Bereich von 50/50 bis 78/22 liegt, und
δG' in dem Bereich von ≥ 120 kPa und ≤ 3 000 kPa liegt, wobei δG' (G' (1 %) - G' (100 %)) darstellt, wobei G' (1 %) eine Scherelastizität bei dynamischer Dehnung: 1 % darstellt und G' (100 %) eine Scherelastizität bei dynamischer Dehnung: 100 % des Fluorkautschuks in einem nicht vulkanisierten Zustand darstellt, gemessen in einer dynamischen Viskoelastizitätsprüfung durch einen Kautschuk-Prozessanalysator (RPA) jeweils unter den Bedingungen der Messfrequenz: 1 Hz, der Messtemperatur: 100 °C.

2. Reifenherstellungsverfahren nach Anspruch 1, wobei die Kautschukzusammensetzung für einen Balg Fluorkautschuk mit im Wesentlichen 100 Masse-% enthält.

3. Reifenherstellungsverfahren nach Anspruch 1 oder 2, wobei das Kautschukelement mit hoher Schwefelkonzentration ein Kautschuk unter Wulstgewebe ist.

4. Reifenherstellungsverfahren nach einem der Ansprüche 1 bis 3, wobei das Vernetzungsmittel ein Vernetzungsmittel auf Polyol-Grundlage oder ein Vernetzungsmittel auf Polyamin-Grundlage ist.

5. Reifenherstellungsverfahren nach einem der Ansprüche 1 bis 4, wobei die Kautschukzusammensetzung in einem vulkanisierten Zustand, welche den Vulkanisierbalg bildet, i) einen Verlustelastizitätsmodul E" in dem Bereich von ≥ 400 kPa und ≤ 6 000 kPa aufweist, vorausgesetzt, dass E" in einer dynamischen Viskoelastizitätsprüfung unter den folgenden Bedingungen des Messmodus: Zugmodus, Abstand zwischen Spannfuttern: 20 mm, Zugdehnung: 1 %, Messfrequenz: 10 Hz, statische Zugkraft, wenn Dehnungen unter einer Bedingung einer konstanten statischen Belastung verteilt sind: 157 cN, und Messtemperatur: 160 °C gemessen wird, und ii) einen Speicherelastizitätsmodul E' in dem Bereich von ≥ 1 500 kPa und ≤ 20 000 kPa, vorausgesetzt, dass E' in einer dynamischen Viskoelastizitätsprüfung unter den folgenden Bedingungen des Messmodus: Zugmodus, Abstand zwischen Spannfuttern: 20 mm, Messtemperatur: 160 °C, Zugdehnung: 1 %, statische Zugkraft, wenn Dehnungen unter einer Bedingung einer konstanten statischen Belastung verteilt sind: 157 cN, und Messfrequenz: 10 Hz gemessen wird, aufweist.

6. Reifenherstellungsverfahren nach einem der Ansprüche 1 bis 5, wobei die Kautschukzusammensetzung für einen Balg ferner mindestens eines enthält, das ausgewählt ist aus der Gruppe, die aus einem fetten Öl und einem aliphatischen Kohlenwasserstoff besteht.

7. Reifenherstellungsverfahren nach Anspruch 6, wobei das fette Öl mindestens eines ist, das ausgewählt ist aus der Gruppe, die aus einem nicht-trocknenden Öl und einem halbtrocknenden Öl besteht.

8. Reifenherstellungsverfahren nach einem der Ansprüche 1 bis 7, wobei die Kautschukzusammensetzung für einen Balg ferner Ruß enthält, und
der Ruß eine spezifische Stickstoff-Adsorptionsoberfläche (N₂SA) in dem Bereich von 25 m²/g bis 180 m²/g und eine Dibutylphthalat(DBP)-Ölabsorption in dem Bereich von 40 ml/100 g bis 180 ml/100 g aufweist.

## Revendications

1. Procédé de production de pneu, dans lequel il comprend un processus de vulcanisation pour vulcaniser un pneu non vulcanisé qui est doté, dans au moins une partie de la surface la plus à l'intérieur de celui-ci, d'un élément de caoutchouc à haute concentration en soufre constitué d'une composition de caoutchouc contenant du soufre en une teneur de ≥ 1,0 parties en masse rapportée à 100 parties en masse d'un composant de caoutchouc,
dans lequel le processus de vulcanisation emploie une vessie de vulcanisation (1) constituée d'une composition de caoutchouc pour une vessie, laquelle composition de caoutchouc contient du caoutchouc fluoré de 50 % en masse à 100 % en masse et un agent de réticulation sélectionné parmi le groupe constitué d'un agent de réticulation à base de polyol, d'un agent de réticulation à base de polyamine, d'un agent de réticulation à base d'oxazole, d'un agent de réticulation à base de thiazole, d'un agent de réticulation à base d'imidazole et d'un agent de réticulation à base de triazine,
dans lequel l'élément de caoutchouc à haute concentration en soufre est un caoutchouc de bandelette de talon et/ou un caoutchouc de renforcement pour un pneu roulage à plat,
le caoutchouc fluoré est un caoutchouc fluoré à base de fluorure de vinylidène comportant une unité structurelle dérivée de fluorure de vinylidène (unité VdF) et une unité structurelle dérivée d'au moins un composé sélectionné dans le groupe constitué de l'hexafluoropropylène (HFP), du 2,3,3,3-tétrafluoropropylène et du perfluoroalkyl vinyl éther (PAVE),
le rapport molaire de l'unité VdF par rapport à l'unité structurelle dérivée d'au moins un composé sélectionné dans le groupe constitué du HPF, du 2,3,3,3-tétrafluoropropylène et du PAVE dans le caoutchouc fluoré est compris entre 50 / 50 et 78 / 22, et
δG' est compris dans une plage de ≥ 120 kPa à ≤ 3 000 kPa, dans lequel δG' représente (G' (1 %) - G' (100 %)), dans lequel G' (1 %) représente une élasticité sous cisaillement à un allongement dynamique de 1 % et G' (100 %) représente une élasticité sous cisaillement à un allongement dynamique de 100 % du caoutchouc fluoré dans un état non vulcanisé, mesurée dans un essai de viscoélasticité dynamique par un analyseur de transformation de caoutchouc (RPA) respectivement sous les conditions de la fréquence de mesure de 1 Hz, de la température de mesure de 100 °C.

2. Procédé de production d'un pneu selon la revendication 1, dans lequel la composition de caoutchouc pour une vessie contient du caoutchouc fluoré de sensiblement 100 % en masse.

3. Procédé de production de pneu selon la revendication 1 ou 2, dans lequel l'élément de caoutchouc à haute concentration en soufre est un caoutchouc de bandelette de talon.

4. Procédé de production de pneu selon l'une quelconque des revendications 1 à 3, dans lequel l'agent de réticulation est un agent de réticulation à base de polyol ou un agent de réticulation à base de polyamine.

5. Procédé de production de pneu selon l'une quelconque des revendications 1 à 4, dans lequel la composition de caoutchouc dans un état vulcanisé, constituant la vessie de vulcanisation, présente i) un module élastique de perte E" compris dans une plage de ≥ 400 kPa à ≤ 6 000 kPa, à la condition que E" est mesuré dans un essai de viscoélasticité dynamique sous les conditions de mode de mesure suivantes : mode de traction, distance entre mandrins : 20 mm, allongement à la traction : 1 %, fréquence de mesure : 10 Hz, force de traction statique lorsque des contraintes sont dispersées sous une condition de charge statique constante : 157 cN, et température de mesure : 160 °C, et ii) un module élastique de conservation E' compris dans une plage de ≥ 1 500 kPa à ≤ 20 000 kPa, à la condition que E' est mesuré dans un essai de viscoélasticité dynamique sous les conditions de mode de mesure suivantes : mode de traction, distance entre mandrins : 20 mm, température de mesure : 160 °C, allongement à la traction : 1 %, force de traction statique lorsque des contraintes sont dispersées sous une condition de charge statique constante : 157 cN, et fréquence de mesure : 10 Hz.

6. Procédé de production de pneu selon l'une quelconque des revendications 1 à 5, dans lequel la composition de caoutchouc pour une vessie contient en outre au moins un élément sélectionné dans le groupe constitué d'une huile grasse et d'un hydrocarbure aliphatique.

7. Procédé de production de pneu selon la revendication 6, dans lequel l'huile grasse est au moins un élément sélectionné parmi le groupe constitué d'une huile non siccative et d'une huile semi-siccative.

8. Procédé de production de pneu selon l'une quelconque des revendications 1 à 7, dans lequel la composition de caoutchouc pour une vessie contient en outre du noir de carbone, et
le noir de carbone a une surface spécifique d'adsorption d'azote (N₂SA) dans la plage allant de 25 m²/g à 180 m²/g et une absorption d'huile de pthalate de dibutyle (DBP) dans la plage allant de 40 ml/100 g à 180 ml/100 g.
